# EUROPEAN PATENT APPLICATION

(11) **EP 2 442 219 A2**
(43) Date of publication of application: **18.04.2012**
(21) Application number: 10786371.4
(22) Date of filing: 09.06.2010
(51) Int. Cl.: G06F 3/048

(54) **METHOD FOR PROVIDING A USER LIST AND DEVICE ADOPTING SAME**

(30) Priority: 09.06.2009 KR 20090050854
(71) Applicant: Samsung Electronics Co., Ltd., Suwon-si, Gyeonggi-do 442-742 (KR)
(72) Inventor: KWAHK, Ji-young, Seongnam-si Gyeonggi-do 463-020 (KR); KWON, Giang-yoon, Seoul 134-050 (KR); JEON, Jin-young, Seoul 135-081 (KR); HWANG, Sang-woong, Yongin-si Gyeonggi-do 446-572 (KR); YOON, Jee-sun, Seoul 137-755 (KR)
(74) Representative: Jenkins, Richard Gavin
(86) International application number: PCT/KR2010/003705
(87) International publication number: WO 2010/143888

(57) **Abstract**

A method of providing a user list and a device adopting the method are provided. The method includes: displaying a first task list, in which at least one task selected by a first user is includable, in a first area of a display; and displaying a second task list, in which at least one task selected by a second user is includable, in a second area of the display. Therefore, if users perform different jobs by using one device, the users individually and further conveniently, efficiently manage and use their jobs by using lists which include tasks desired by the users.

## Description

### TECHNICAL FIELD

The present invention relates to a method of providing a user list, and more particularly, to a method of providing a list desired by each user and a device adopting the method.

### BACKGROUND ART

In general, in the case of a portable device, one user uses one device. However, in the case of a mounted type device, several users frequently share one device.

If several users share one device, one of the several users generally controls the device. However, if necessary, the several users control the device together.

In this case, users perform different jobs by using a device. A graphical user interface (GUI) is required in this environment so that the users further efficiently collaborate to perform the different jobs by using one device and efficiently manage their individual jobs.

### DETAILED DESCRIPTION OF THE INVENTION

### TECHNICAL PROBLEM

The present invention provides a method of providing user lists which respectively include different tasks or applications according to users.

### TECHNICAL SOLUTION

According to an aspect of the present invention, there is provided a method for providing a user list. The method may include: displaying a first task list, in which at least one task selected by a first user is includable, in a first area of a display; and displaying a second task list, in which at least one task selected by a second user is includable, in a second area of the display.

The method may further include: if one of tasks included in the first task list is moved to a third area of the display by the first user, displaying a task execution window in which the moved task has been executed.

The method may further include making the moved task disappear from the first task list.

The task execution window may be displayed in a direction appropriate for the first user to look at.

The third area may be an area which is shared by the first and second users.

The method may further include: if the task execution window displayed in the third area of the display is moved to the first task list, additionally including a task, which is executed in the moved task execution window, in the first task list.

The method may further include making the moved task execution window disappear from the third area of the display.

The method may further include: if one of tasks included in the first task list is moved toward a first direction, deleting the moved task from the first task list.

The first direction may be a direction which faces a side of the display.

The method may further include displaying information for specifying the first user around the first task list.

The first area of the display in which the first task list is displayed may be an area which is adjacent to one of fourth sides of the display nearest to the first user.

The first task list may be displayed in a direction appropriate for the first user to look at.

At least one task, which is first included in the first task list, may be determined by information obtained from a medium possessed by the first user.

The method may further include displaying a first application list, in which at least one application selected by the first user is includable, on the display.

The display of the first application list may be performed if an icon positioned around the first task list is selected by the first user.

At least one application, which is first included in the first application list, may be determined by information obtained from a medium possessed by the first user.

A direction in which applications are listed in the first application list may be different from a direction in which tasks are listed in the first task list.

The method may further include: if one of applications included in the first application list is moved to the third area of the display by the first user, displaying an application execution window in which the moved application has been executed.

The method may further include moving and displaying the first task list to a position command by the first user.

When moving and displaying the first task list, the first task list may be rotated and displayed in a direction appropriate to be looked at on a side of the display adjacent to the position.

The method may further include: if a particular icon displayed on the display is selected, displaying a third task list, in which tasks are includable, on the display; and if a command to end the third task list is input, making the third task list disappear and displaying the particular icon.

According to another aspect of the present invention, there is provided a device including: a display; and a controller which displays a first task list, in which at least one task selected by a first user is includable, in a first area of the display and displays a second task list, in which at least one task selected by a second user is includable, in a second area of the display.

According to another aspect of the present invention, there is provided a method for providing a user list. The method may include: displaying a first application list, in which at least one application selected by a first user is includable, in a first area of a display; and displaying a second application list, in which at least one application selected by a second user is includable, in a second area of the display.

### ADVANTAGEOUS EFFECTS

As described above, according to the present invention, user lists which respectively include different tasks or applications according to users are provided. Therefore, if users perform different jobs by using one device, the users further conveniently and efficiently manage and use their individual jobs by using lists which include tasks or applications respectively desired by the users.

### DESCRIPTION OF THE DRAWINGS

FIGS. 1 through 8 are views illustrating concepts of a user tray and a task tray.
FIGS. 9 through 13 are views illustrating a concept of an application tray.
FIGS. 14 through 17 are views illustrating a concept of task/application scrolling.
FIGS. 18 through 21 are views illustrating a concept of a task/application order replacement.
FIGS. 22 through 27 are views illustrating a concept of a highlight of a task included in a task tray.
FIGS. 28 through 31 are views illustrating a method of moving a user tray to another position of a touch screen.
FIGS. 32 and 33 are views illustrating a method of ending a user tray to make the user tray disappear from a touch screen.
FIGS. 34 through 36 are views illustrating a realization of user trays for many users.
FIGS. 37 through 40 are views illustrating a concept of a guest tray.
FIG. 41 is a block diagram of a device according to an exemplary embodiment of the present invention.
FIG. 42 is a flowchart illustrating a control process performed by a controller.

### BEST MODE

The present invention will now be described in more detail with reference to the attached drawings.

The present invention suggests a user tray. The user tray includes a task tray and an application tray.

The task tray refers to a graphical user interface (GUI) which includes tasks selected by a user, i.e., corresponds to a kind of list in which the tasks selected by the user are listed.

A task refers to a job which is performed by an application according to a user command. For example, the task refers to a job which is performed by a word processor so that a user views and edits a document file designated by the user, a job which is performed by an image viewer to read an image file designated by the user so that the user views the image file, a job which is performed by an Internet browser so that the user surfs the Internet, or a job which is performed by the Internet browser so that the user uses a webpage of a uniform resource locater (URL) designated by the user.

An execution result of a task executed by an application appears in a task execution window. For example, the execution result of the task appears in a window in which a word processor reading a document file designated by a user has been executed.

The application tray refers to a GUI which includes applications selected by the user, i.e., corresponds to a kind of a list in which the applications selected by the user are listed.

### 1. User Tray & Task Tray

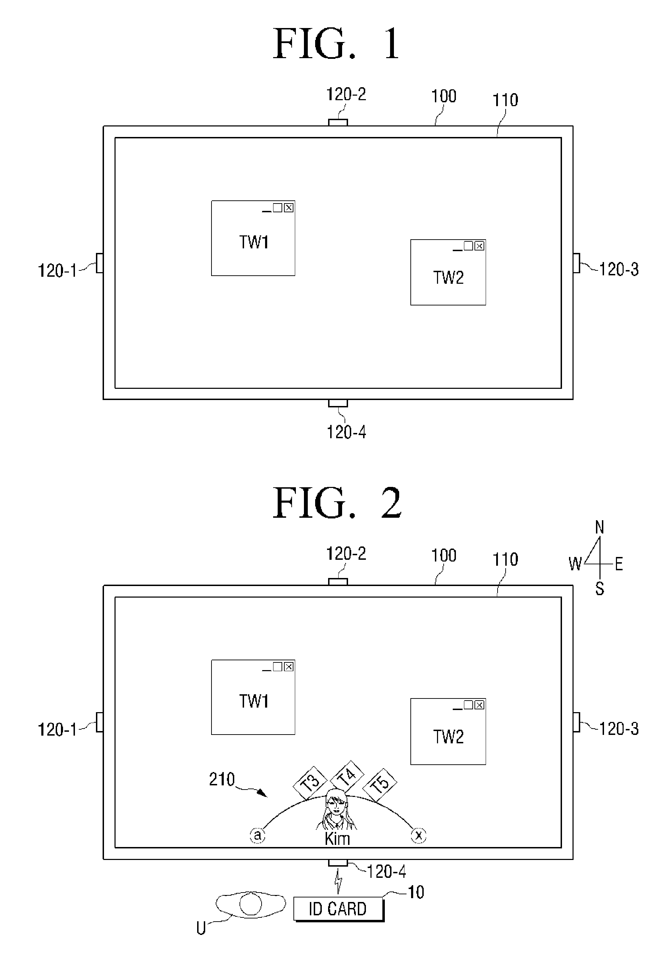

FIGS. 1 through 8 are views illustrating concepts of a user tray and a task tray. A tabletop device 100 used in a digital conference is shown in FIG. 1. As shown in FIG. 1, a touch screen 110 is provided in an upper part of the tabletop device 100, and first through fourth card readers 120-1 through 120-4 are respectively provided on four sides of the tabletop device 100.

Referring to FIG. 1, first and second task execution windows TW1 and TW2 appear on the touch screen 110. The first and second task execution windows TW1 and TW2 refer to windows in which execution results of tasks executed by applications installed in the tabletop device 100 appear, as described above.

The first task execution window TW1 refers to a window in which an execution result of a first task T1 appears, and the second execution window TW2 refers to a window in which an execution result of a second task appears.

Referring to FIG. 2, a user U having an identification (ID) card 10 accesses a south side of the tabletop device 100 to bring the ID card 10 into contact with the fourth card reader 120-4 provided on the south side of the tabletop device 100.

If the ID card 10 of the user U contacts the fourth card reader 120-4 as described above, a use tray 210 appears on the south side of the touch screen 110 of the tabletop device 100 as shown in FIG. 2.

As shown in FIG. 2, a task tray 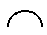 , an application calling/ending icon ⓐ, a user tray ending icon ⓧ, and user information appear in the user tray 210.

**1) Task Tray** 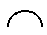

Third, fourth, and fifth tasks T3, T4, and T5 are listed on a north side of the task tray 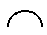 shown in FIG. 2. The third, fourth, and fifth tasks T3, T4, and T5 refer to tasks which are selected by the user U and included in the task tray 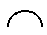 .

Strictly speaking, things listed in the task tray ( 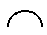 ) are not tasks but icons symbolizing the tasks, and the icons may be realized as thumbnail images which may respectively symbolize the tasks.

However, in the present specification, for the writing convenience, the tasks are listed in the task tray 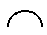 .

Information about which tasks are included in the task tray 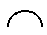 is recorded in the ID card 10 of the user U. Therefore, the tabletop device 100 determines the third, fourth, and fifth tasks T3, T4, and T5 which are to be first included in the task tray 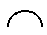 , based on the information which is recorded in the ID card 10 of the user U and is read by the fourth card reader 120-4.

### 2) Application Calling/Ending Icon ⓐ

The application calling/ending icon ⓐ appearing on a south side of the task tray is used to call an application tray through a touch input. The application tray will be described in detail later.

### 3) User Tray Ending Icon ⊗

The user tray ending icon ⊗appearing on an east side of the task tray 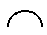 is used to input a user tray ending command (i.e., a command to make a user tray disappear from the touch screen 110) through a touch input.

### 4) User Information

The user information appearing on the south side of the task tray 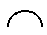 ) is information which specifies the user U having the ID card 10 contacting the fourth card reader 120-4. In FIG. 2, the user information includes a picture and a name of the user U. The user U easily recognizes which is the user tray of the user U, through the user information.

A method of controlling the third, fourth, and fifth tasks T3, T4, and T5 included in the task tray ∩ will now be described in detail.

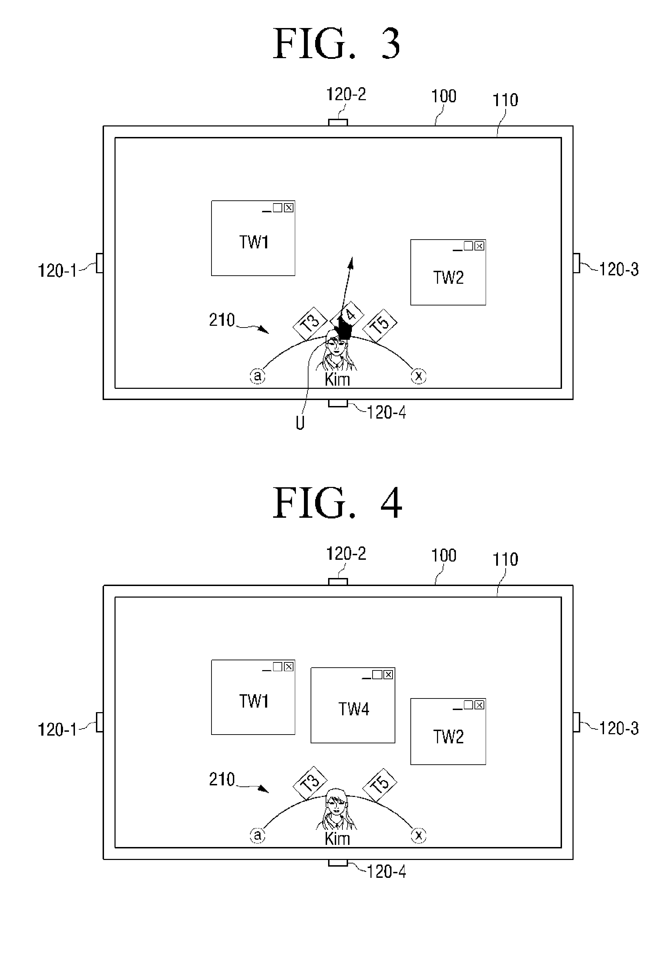

FIGS. 3 and 4 are views illustrating a method of executing tasks included in the task tray 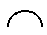 .

As shown in FIG. 3, a task execution command is input by using a dragging and dropping (D&D) method by which the fourth task T4 of the third, fourth, and fifth tasks T3, T4, and T5 of the task tray ∩that the user desires to execute is dragged and dropped onto a wallpaper.

Referring to FIG. 4, through the control of the user U as shown in FIG. 3, the fourth task T4 disappears from the task tray 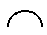 , and a fourth task execution window TW4 appears on the wallpaper. Here, the fourth task execution window TW4 appears in a position into which the fourth task T4 is dropped.

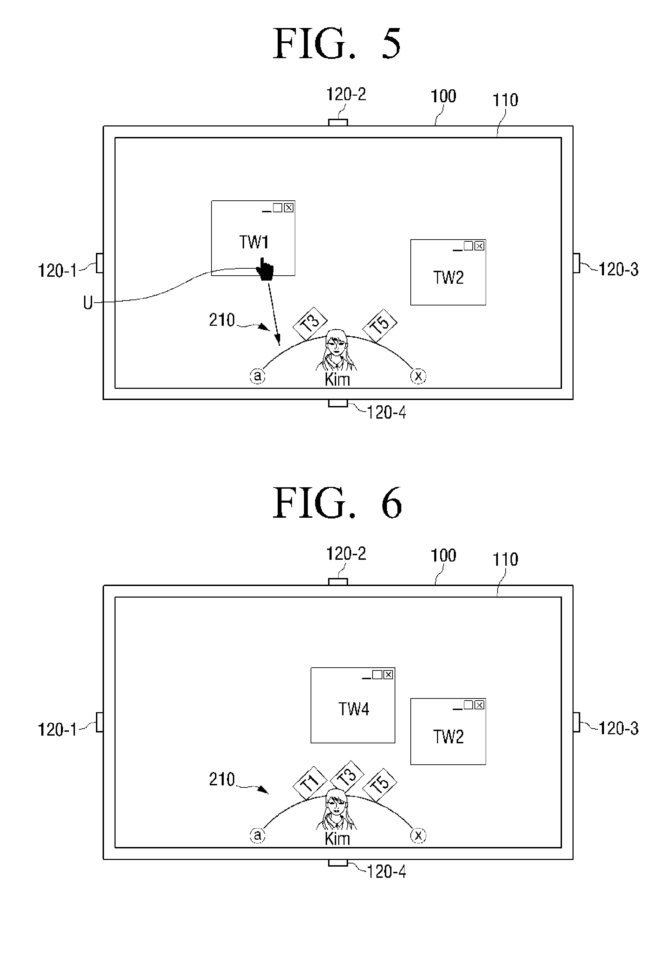

FIGS. 5 and 6 are views illustrating a method of including a task execution window, which appears on the wallpaper, as a task in the task tray 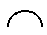 .

As shown in FIG. 5, a task including command is input by using a D&D method by which the first task execution window TW1 of task execution windows that the user U desires to include in the task tray ∩ is dragged and dropped into the task tray∩, wherein the task execution windows appear on the wallpaper.

Referring to FIG. 6, through the control of the user U as shown in FIG. 5, the first task execution window TW1 disappears from the wallpaper, and the first task T1 is included in the task tray ∩.

The task tray 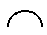 is a personal area only for one user, and the wallpaper is a sharable area for all of users of the tabletop device 100. Therefore, executing a task of the task tray 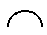 on the wallpaper may be regarded as an action for allowing all of users to share a task of one user. Also, including a task executed on the wallpaper in the task tray 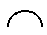 may be regarded as an action for cancelling the task from being shared by the all users and managing the task through only one user.

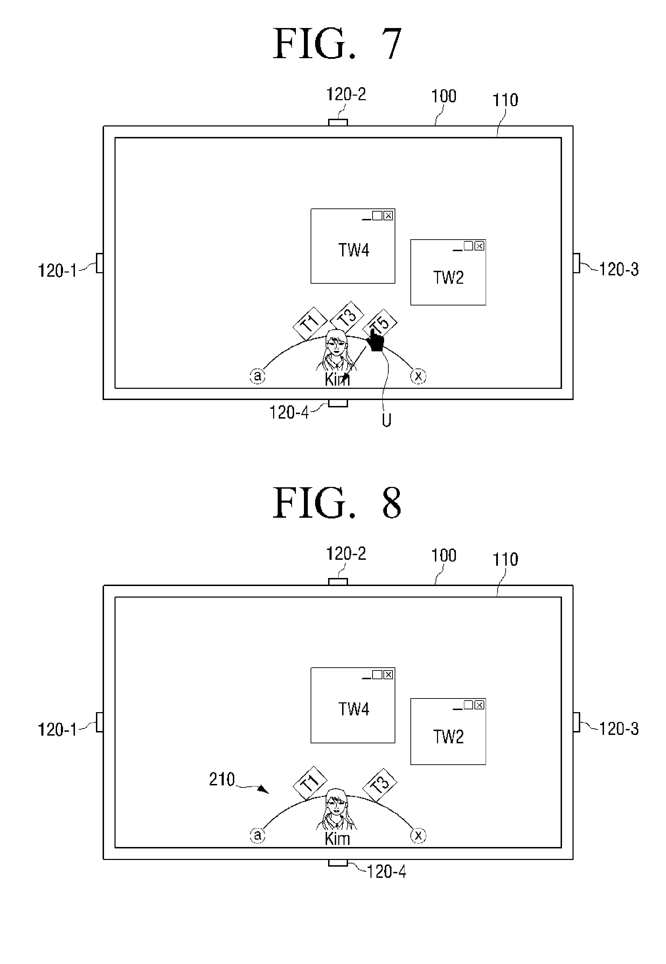

FIGS. 7 and 8 are views illustrating a method of deleting a task included in the task tray 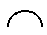 .

As shown in FIG. 7, a task deleting command is input by a D&D method by which the fifth task T of tasks of the task tray 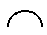 that the user U desires to delete is dragged and dropped outside the touch screen 110 adjacent to the task tray 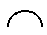 .

Referring to FIG. 8, the fifth task T5 is deleted from the task tray 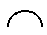 through the control of the user U as shown in FIG. 7.

### 2. Application Tray

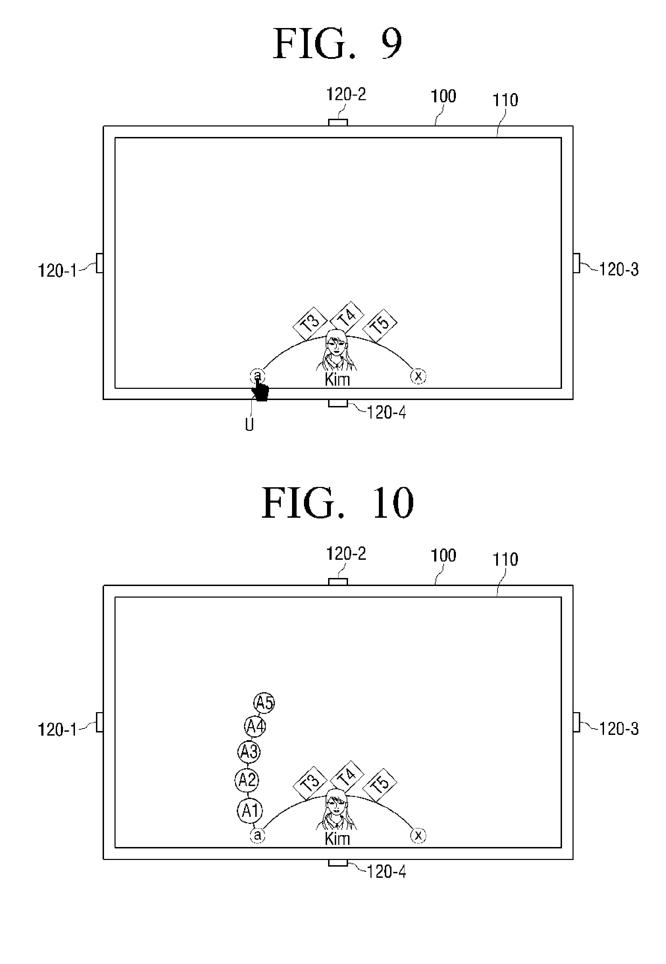

FIGS. 9 through 13 are views illustrating a concept of an application tray. As shown in FIG. 9, the user U touches the application calling/ending icon ⓐ to input application tray calling.

Referring to FIG. 10, an application tray / is called through a user input as shown in FIG. 9. As shown in FIG. 10, first through fifth applications A1 through A5 are listed in the application tray /. The first through fifth applications A1 through A5 are applications which are selected by the user U and included in the application tray /.

Information about which applications are included in the application tray / is recorded in the ID card 10 of the user U. Therefore, the tabletop device 100 determines the first through fifth applications A1 through A5 which are to be first included in the application tray /, based on the information which is recorded in the ID card 10 of the user U and read by the fourth card reader 120-4.

Accordingly, applications included in the application tray / vary according to users.

The first through fifth applications A1 through A5 are listed in a different direction from that in which the third, fourth, and fifth tasks T3 through T5 are listed. In other words, a direction of the application tray / is different from that of the task tray 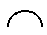 .

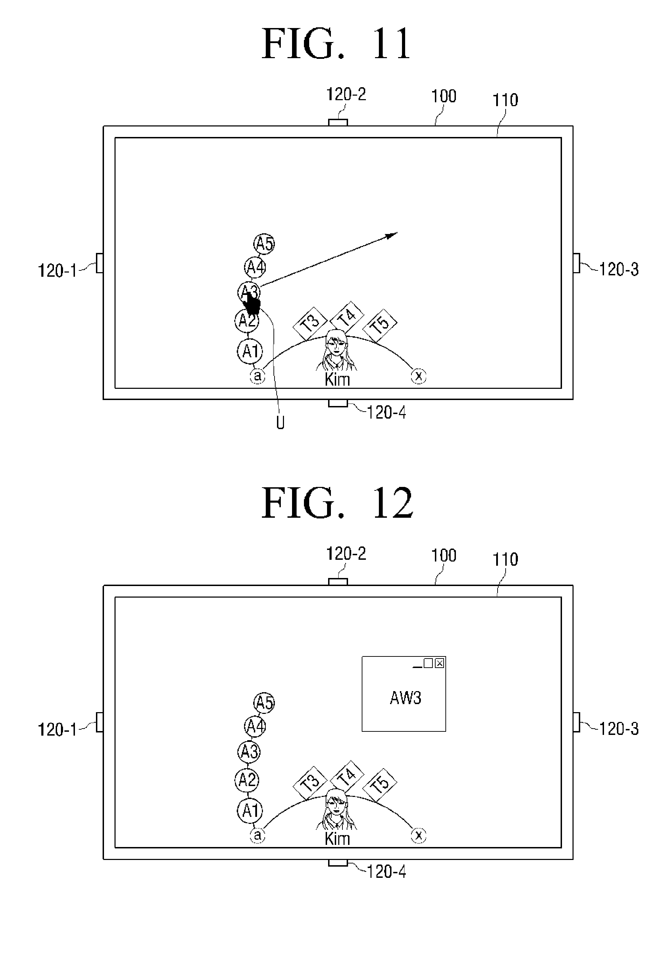

FIGS. 11 and 12 are views illustrating a method of executing an application included in the application tray /.

As shown in FIG. 11, an application executing command is input by using a D&D method by which the third application A3 of the first through fifth applications A1 through A5 of the application tray / that the user U desires to execute is dragged and dropped onto the wallpaper.

Referring to FIG. 12, the third application A3 is executed through the control of the user U as shown in FIG. 11, and thus a third application execution window AW3 appears on the wallpaper. Here, the third application execution window AW3 appears in a position into which the third application A3 is dropped.

Differently from a task which disappears from the task tray 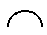 if the task is executed on the wallpaper, an application does not disappear from the application tray / although the application is executed on the wallpaper. The reason is why the application may be repeatedly executed later.

The third application execution window AW3 appearing on the wallpaper may execute a particular task. For example, a case where after the third application execution window AW3 appears, the user U reads a particular document file through the third application execution window AW3 corresponds to this. In this case, the third application execution window AW corresponds to a task execution window. Therefore, the third application execution window AW3 which is the task execution window may be included in the task tray 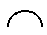 , and an including method thereof is as described above and thus will be om itted.

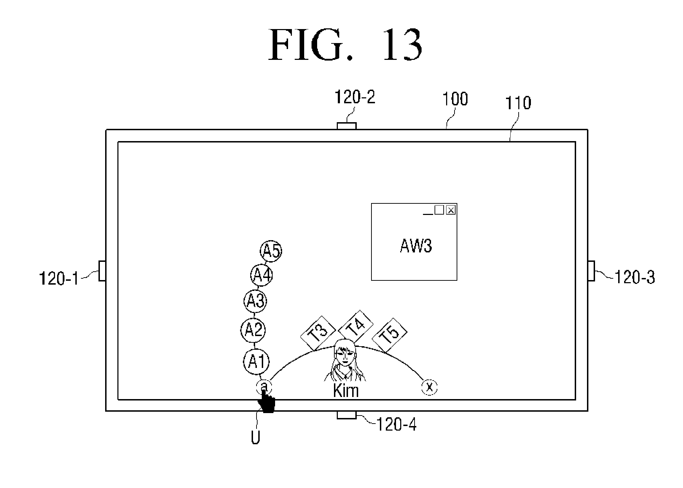

As shown in FIG. 13, if the user U touches the application calling/ending icon ⓐ when the application tray / appears, the application tray disappears and thus returns to a state shown in FIG. 9.

### 3. Task/Application Scrolling

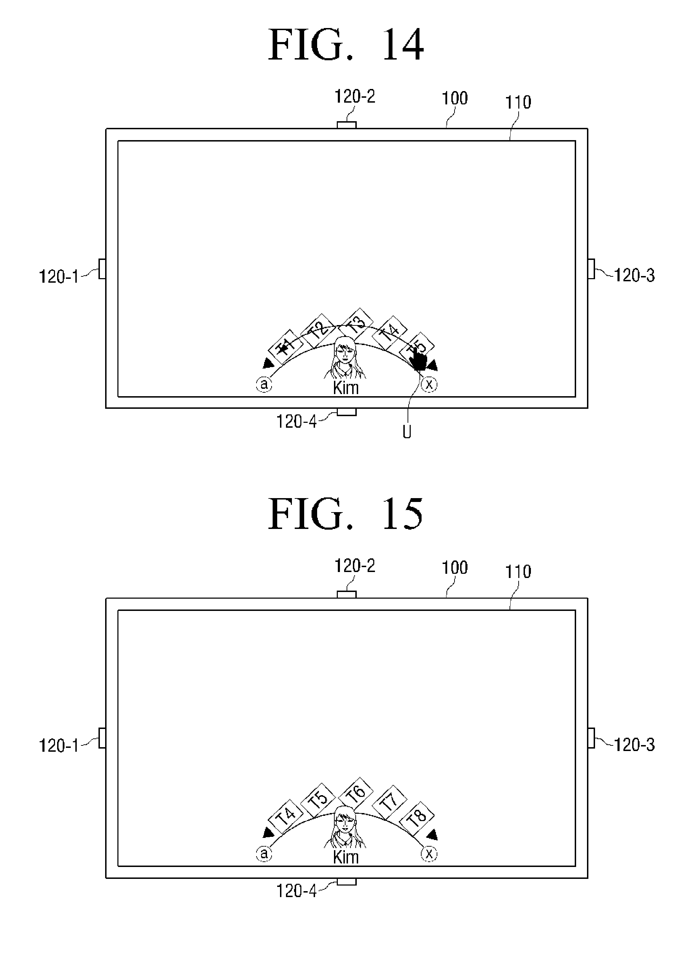

FIGS. 14 and 15 are views illustrating a concept of scrolling of tasks included in the task tray 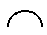 . Task scrolling is used to search for tasks which are not displayed when all of tasks included in the task tray 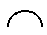 may not be displayed.

As shown in FIG. 14, the user U pans or flicks the task tray 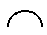 to input the task scrolling. Referring to FIG. 15, tasks included in the task tray 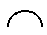 are scrolled through a user input as shown in FIG. 14.

Panning of the user U for task scrolling may be input in an opposite direction to that shown in FIG. 14. In this case, task scrolling may be performed in an opposite direction.

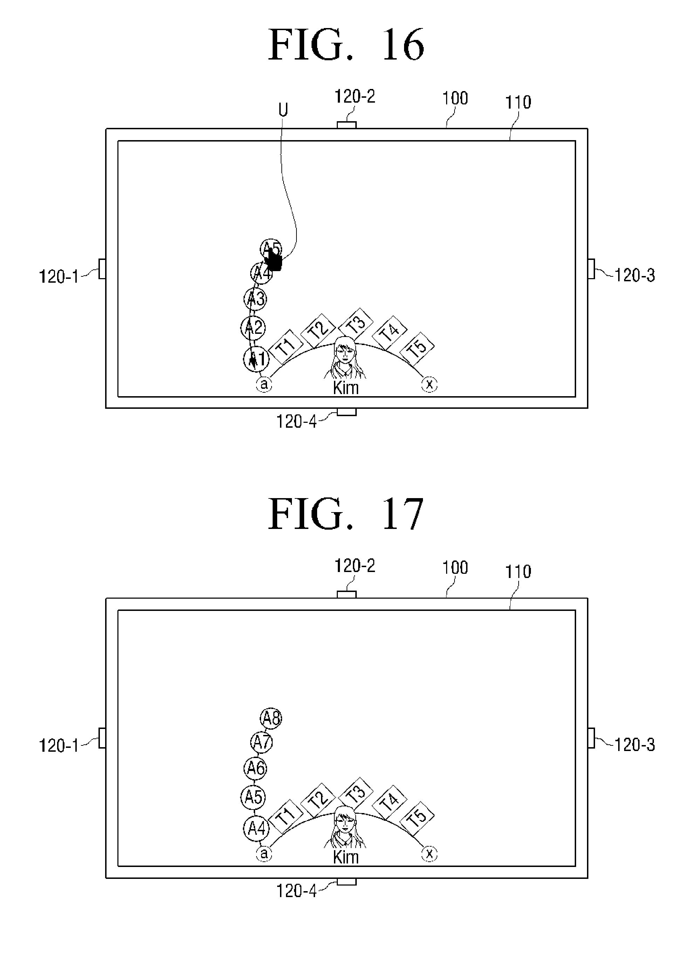

FIGS. 16 and 17 are views illustrating a concept of scrolling of applications included in the application tray /. Application scrolling is used to search for applications which are not displayed when all of applications included in the application tray / may not be displayed.

As shown in FIG. 16, the user U pans or flicks the application tray / to input the application scrolling. Referring to FIG. 17, the applications included in the application tray / are scrolled through the user input as shown in FIG. 16.

Panning of the user U for the application scrolling may be input in an opposite direction to that shown in FIG. 16. In this case, the application scrolling may be performed in an opposite direction.

### 4. Task/Application Order Replacement

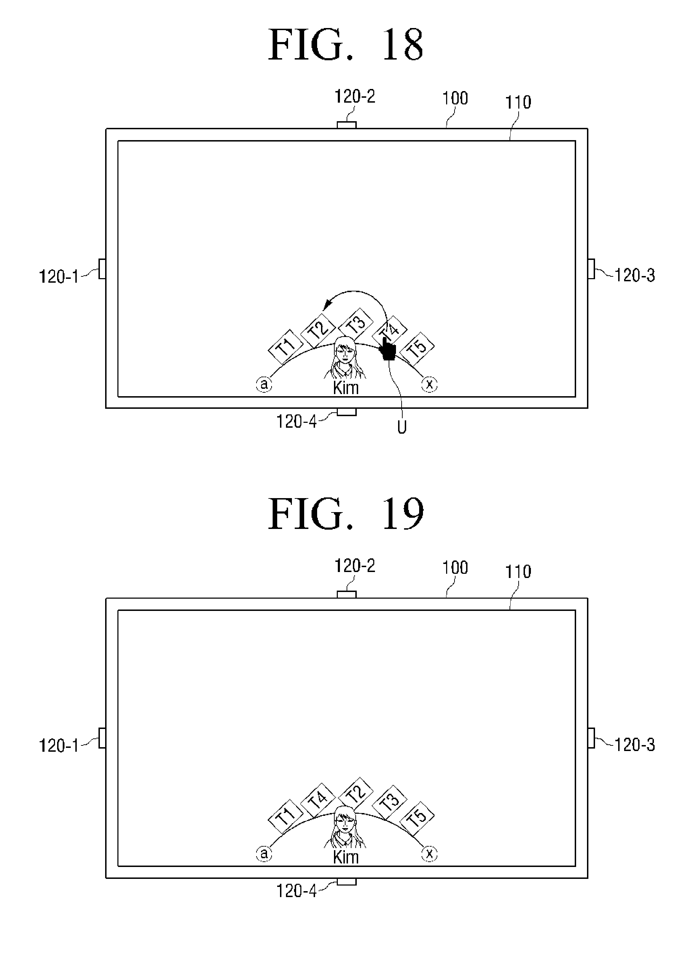

FIGS. 18 and 19 are views illustrating a concept of a replacement of orders of tasks included in the task tray 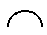 .

As shown in FIG. 18, a task order replacing command is input by using a D&D method by which the fourth task T4 of tasks of the task tray 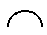 that the user U desires to change to a potion of a desired order is dragged and dropped into the position of the desired order. Referring to FIG. 19, the order of the fourth task T4 included in the task tray 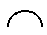 is changed ahead through the user input as shown in FIG. 18.

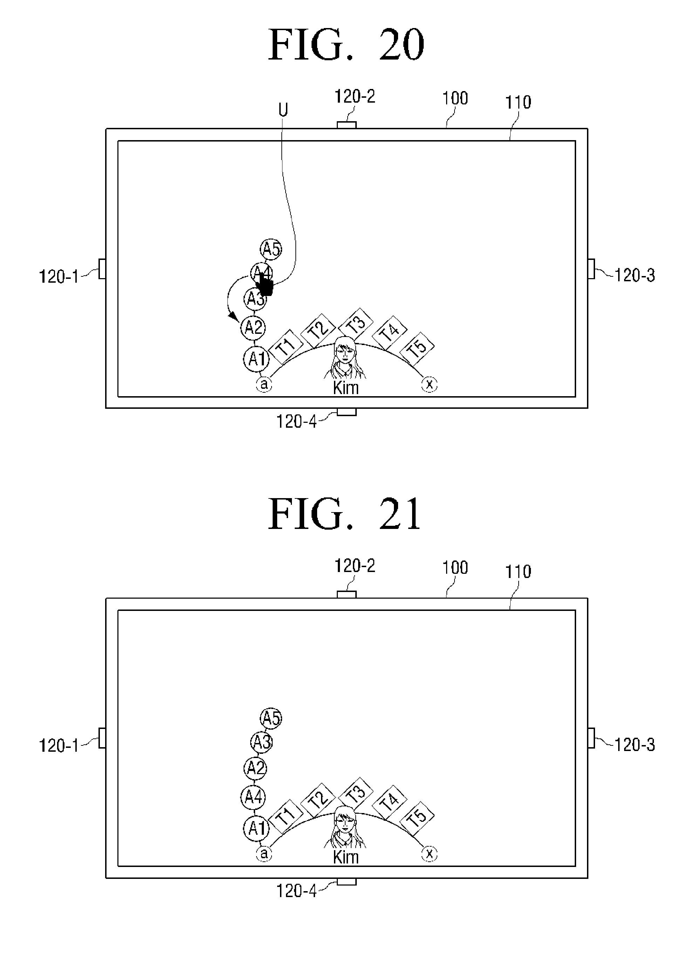

FIGS. 20 and 21 are views illustrating a concept of a replacement of orders of applications included in the application tray /.

As shown in FIG. 20, an application order replacing command is input by using a D&D method by which the fourth application A4 of applications of the application tray / that the user U desires to change to a position of a desired an order is dragged and dropped into the position of the desired order. Referring to FIG. 21, the order of the fourth application A4 included in the application tray / is changed ahead through the user input as shown in FIG. 20.

### 5. Task/Application Highlight

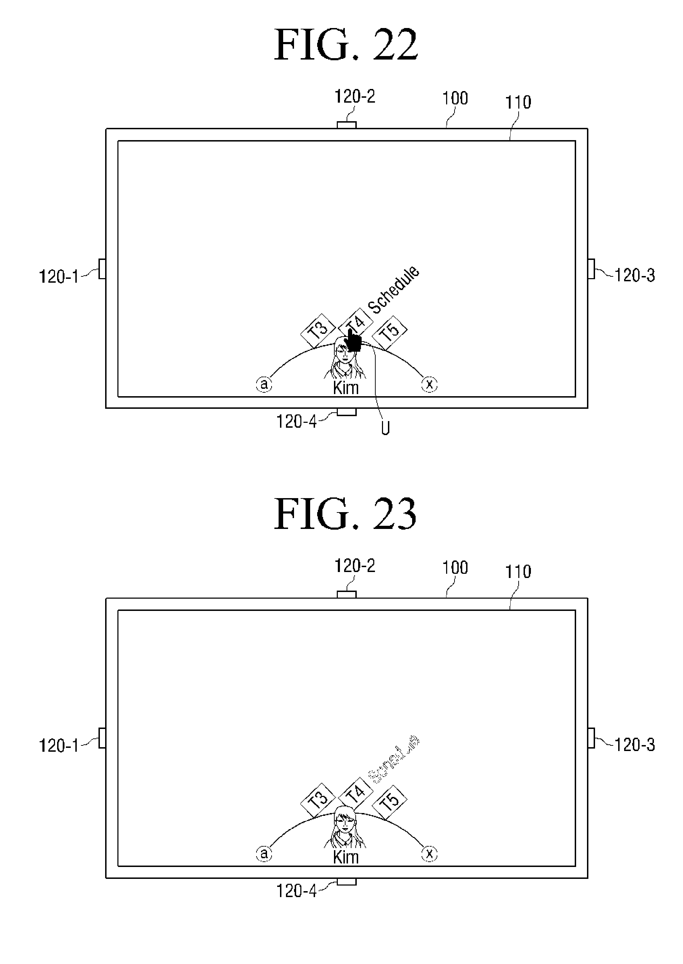

FIG. 22 is a view illustrating a concept of highlighting a task included in the task tray 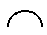 . As shown in FIG. 22, the user U touches the desired fourth task T4 of tasks of the task tray 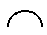 to highlight the fourth task T4. As shown in FIG. 22, a title "Schedule" of the highlighted fourth task T4 appears beside the highlighted fourth task T4.

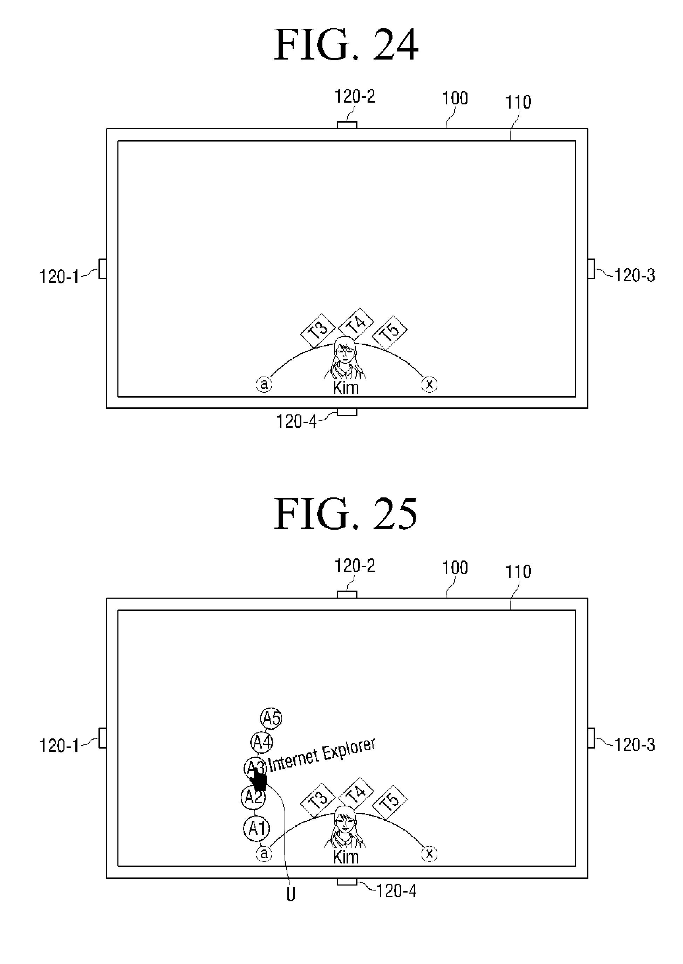

As shown in FIGS. 23 and 24, if the touch of the user U is cancelled, the title "Schedule" of the highlighted fourth task T4 gradually disappears.

FIG. 15 is a view illustrating a concept of highlighting an application included in the application tray /. As shown in FIG. 25, the user U touches a desired application of applications included in the application tray / to highlight the desired application. As shown in FIG. 25, a title "Internet Explorer" of the highlighted application appears beside the highlighted application.

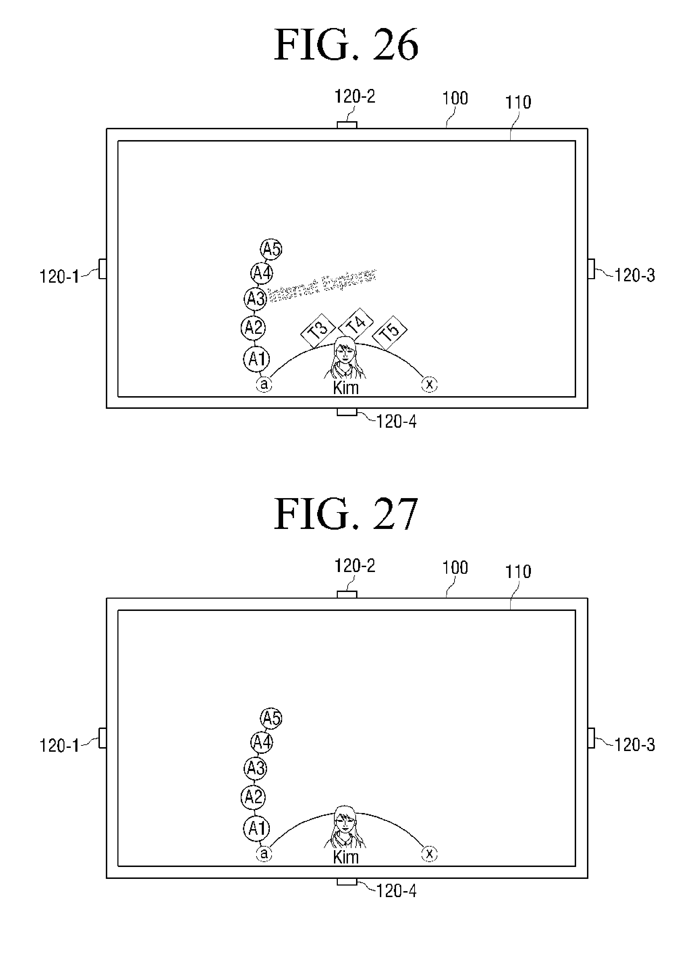

As shown in FIGS. 26 and 27, if the touch of the user U is cancelled, the title "Internet Explorer" of the highlighted application gradually disappears.

### 6. Movement of User Tray

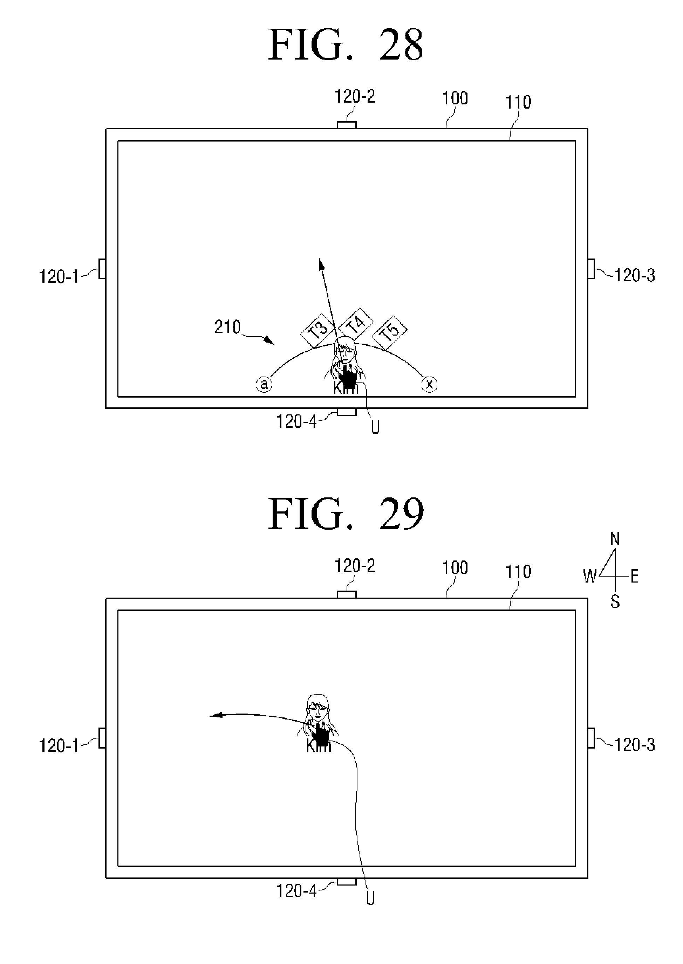

FIGS. 28 through 31 are views illustrating a method of moving the user tray 210 into another position of the touch screen 110.

As shown in FIG. 28, a user tray movement is input by dragging and dropping user information appearing in the user tray 210 into a desired position.

In FIGS. 29 through 31, through dragging and dropping of the user information by the user U, the user tray 210 adjacent to the south side of the touch screen 110 is moved to a west side of the touch screen 110.

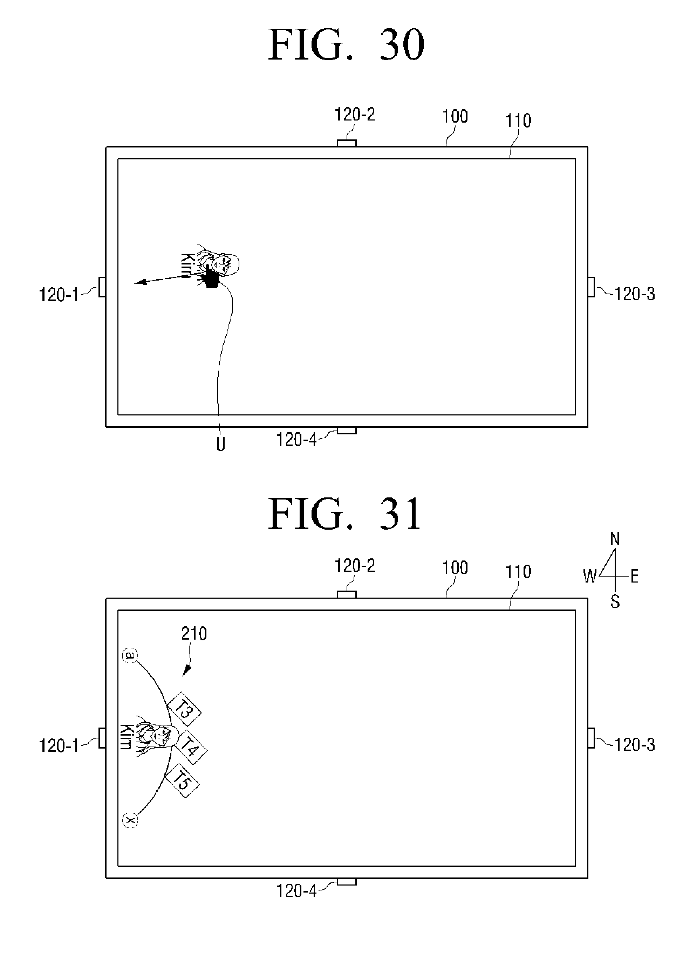

As shown in FIGS. 29 and 30, in the center of the touch screen 100, the whole part of the user tray 210 is not displayed, but only the user information is displayed. As shown in FIG. 30, if the user information that is being dragged is adjacent to the south side of the touch screen 110, a display direction of the user information is changed to an appropriate direction to look at the user information on the west side of the touch screen 100.

As shown in FIG. 31, if the user information is dropped into an area adjacent to the west side of the touch screen 110, the whole part of the user tray 210 appears. Here, the user tray 210 appears in an appropriate direction to be looked at on the west side of the touch screen 100.

### 7. Ending of User Tray

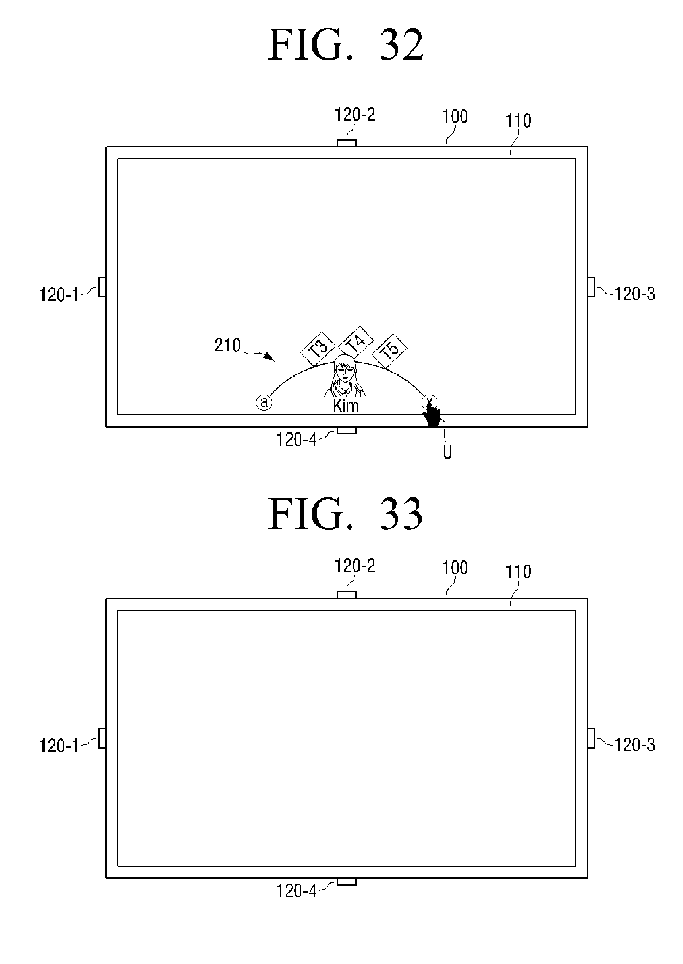

FIGS. 32 and 33 are views illustrating a method of ending the user tray 210 to make the user tray 210 disappear from the touch screen 110. As shown in FIG. 32, the user U touches the user tray ending icon ⊗ appearing in the user tray 210 to input a user tray ending command.

Referring to FIG. 32, the user tray 210 is ended and thus disappears from the touch screen 110 through the user input as shown in FIG. 32.

If the user tray 210 is not used for a predetermined time, the user tray 210 is automatically ended. Here, a time remaining until the user tray 210 is automatically ended is displayed around the user tray 210 in order to inform the user U of automatic ending of the user tray 210.

This is effective in a case where several user trays appear in the tabletop device 100. This is to automatically end an unused user tray to simplify the touch screen 110 of the tabletop device 100.

### 8. Realization of User Tray for Many Users

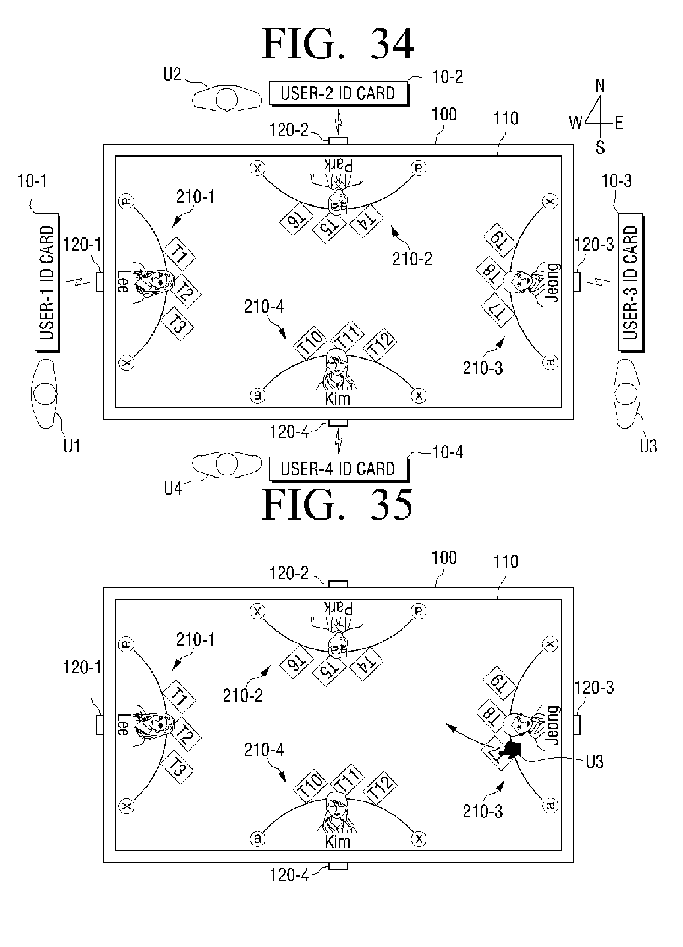

Referring to FIG. 34, first through fourth user trays 210-1 through 210-4 are respectively provided for first through fourth users U1 through U4 so that the first through fourth users U1 through U4 hold a conference by using the tabletop device 100.

Referring to FIG. 34, the first user tray 210-1 is for the first user U1 who brings an ID card 10-1 into contact with a first card reader 210-1. Also, the first user tray 210 appears in an area adjacent to a west side of the touch screen 110 (a side of the touch screen 110 nearest to the first user U1) in a direction appropriate for the user U1 to look at.

The second user tray 210-2 is for the second user U2 who brings an ID card 10-2 into contact with a second card reader 120-2. Also, the second user tray 210-2 appears in an area adjacent to a north side of the touch screen 110 (a side of the touch screen 110 nearest to the second user U2) in a direction appropriate for the second user U2 to look at.

The third user tray 210-3 is for the third user U3 who brings an ID card 10-3 into contact with a third card reader 120-3. Also, the third user tray 210-3 appears in an area adjacent to an east side of the touch screen 10 (a side of the touch screen 110 nearest to the third user U3) in a direction appropriate for the third user U3 to look at.

The fourth user tray 210-4 is for the fourth user U4 who brings an ID card 10-4 into contact with a fourth card reader 120-4. Also, the fourth user tray 210-4 appears in an area adjacent to a south side of the touch screen 110 (a side of the touch screen 110 nearest to the fourth user U4) in a direction appropriate for the fourth user U4 to look at.

Also, as shown in FIG. 34, tasks included in first through fourth task trays of the first through fourth user trays 210-1 through 210-4 respectively differently appear. This reflects that the tasks of the first through fourth task trays vary according to the firth through fourth users U1 through U4.

The first through fourth user trays 210-1 through 210-4 appearing in the areas respectively adjacent to four sides of the touch screens 110 are displayed in directions appropriate for the first through fourth users U1 through U4 to look at.

If a task is dragged and dropped from a user tray 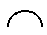 onto the wallpaper, a task execution window appearing on the wallpaper is also displayed in a direction appropriate for a user of the task tray 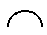 to look at.

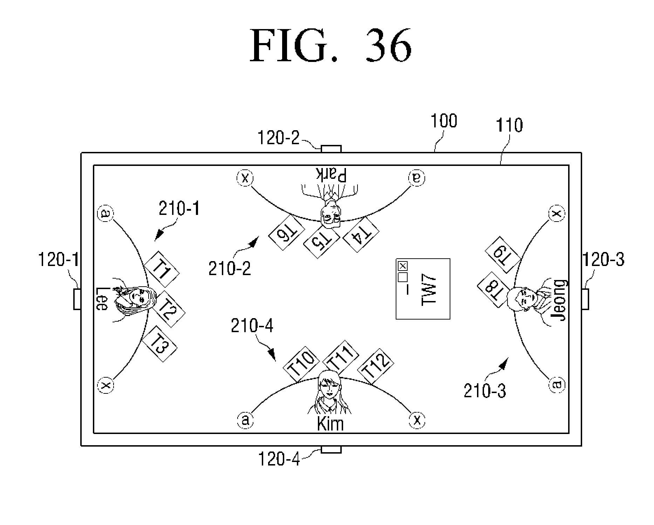

In other words, as shown in FIGS. 35 and 36, if a seventh task T7 is dragged and dropped from a task tray 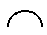 of the third user tray 210-3 onto the wallpaper, a seventh task execution window TW7 appearing on the wallpaper is displayed in a direction appropriate for the third user U3 of the third user tray 210-3 to look at.

### 9. Guest Tray

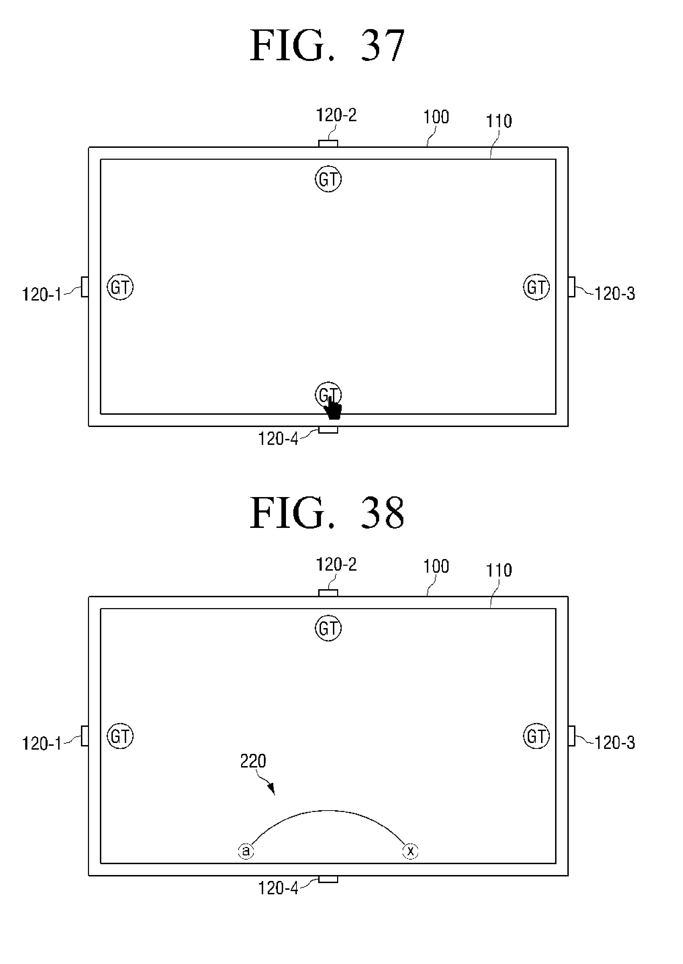

FIGS. 37 through 40 are views illustrating a concept of a guest tray which is a kind of user tray. The guest tray refers to a tray for a guest. Here, the guest refers to a person who does not have an ID card.

As shown in FIG. 37, in order to input guest tray calling, a guest G touches one of guest tray calling icons GT appearing in centers of four sides of the touch screen 110.

Referring to FIG. 38, through the user input as shown in FIG. 37, the guest tray calling icon GT disappears, and a guest tray 220 is called. As shown in FIG. 38, the guest tray 220 appears around the guest tray calling icon GT which has disappeared.

As shown in FIG. 38, the guest tray 220 does not include user information, and a task tray 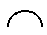 of the guest tray 220 includes tasks. Therefore, the guest tray 220 is different from a user tray called by an ID card.

Also, applications included in an application tray of the user tray called by the ID card vary according to users. However, no matter what a guest tray is called by any guest, the applications included in the application tray are the same.

Except for the above-described different point, a guest tray control is the same as a user tray control, and thus detailed descriptions of the guest tray control will be omitted.

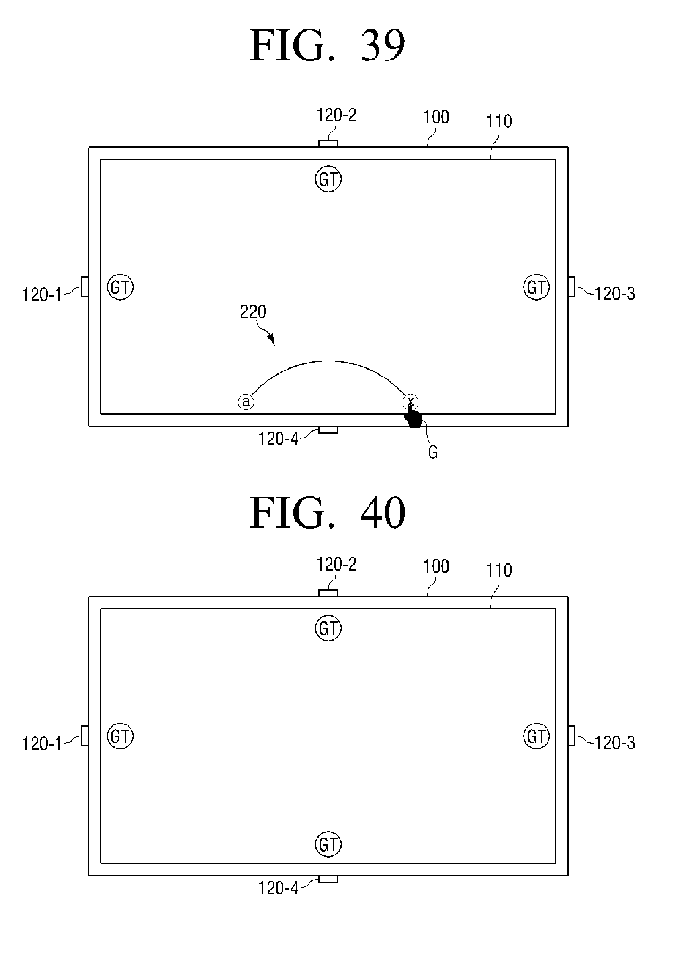

If the guest tray ending icon ⊗is touched by the guest G as shown in FIG. 39, the guest tray 220 disappears, and the guest tray calling icon GT reappears as shown in FIG. 40.

### 10. Other Modifications

In the above-described embodiments, information necessary for providing a user tray is obtained from a user ID card. The information necessary for providing the user tray includes information about tasks which are to be included in a task tray, information about applications which are to be included in an application tray, and user information.

However, the information necessary for providing the user tray, the information about the tasks, the information about the applications, and the user information may be obtained from another means. For example, the information necessary for providing the user tray, the information about the tasks, the information about the applications, and the user information may be obtained from a personal computer (PC) of a user which is connected to the tabletop device 100 through a network, a management server, or a storage medium installed in the tabletop device 100.

In addition, the information necessary for providing the user tray, the information about the tasks, the information about the applications, and the user information may be respectively obtained from different means. For example, the user information may be obtained from a user ID card, and the information about the tasks and the information about the applications may be obtained from a PC of a user connected to a network, a management server, or a storage medium of the tabletop device 100 by using the user information.

### 11. Device to Which the Present Invention may be Applied

In the above-described embodiments, a user tray is provided in the tabletop device 100. However, the present invention may be applied to other devices besides the tabletop device 100. In other words, the present invention may be applied to any device which may be shared by several users.

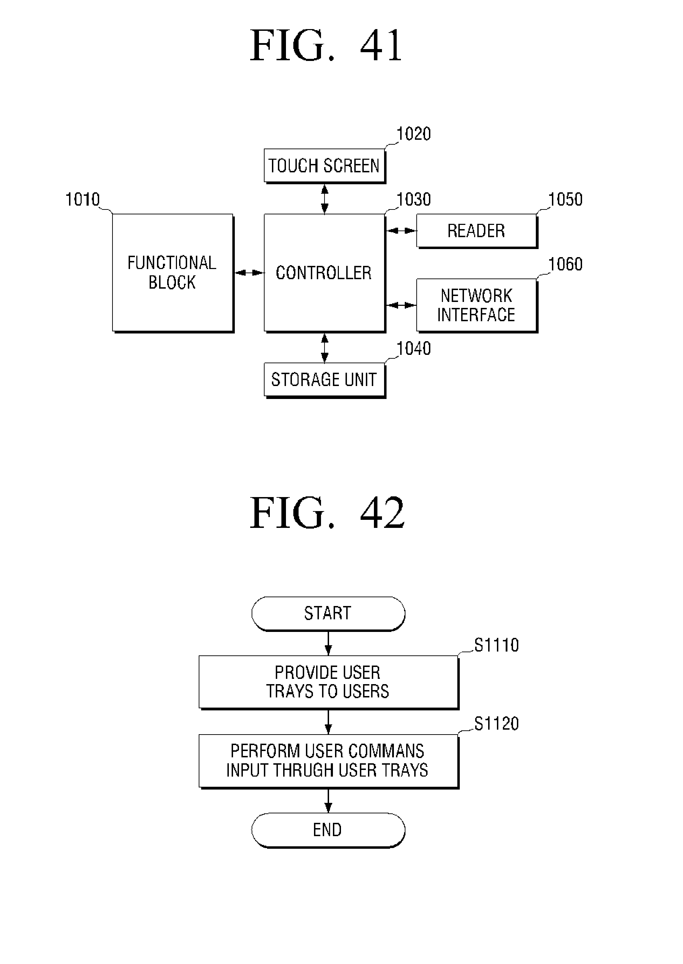

FIG. 41 is block diagram of a device to which the present invention may be applied. Referring to FIG. 41, the device includes a functional block 1010, a touch screen 1020, a controller 1030, a storage unit 1040, a reader 1050, and a network interface 1060.

The functional block 1010 performs a function of the device. If the device is a tabletop device, the functional block 1010 performs a function necessary for a digital conference.

The touch screen 1020 operates as a display which displays a GUI such as an execution result of the functional block 1010, a user tray, a guest tray, and a task execution window. The touch screen 1020 also operates as a user interface which is to receive a user command such as a touch, D&D, etc.

The storage unit 1040 is a storage medium which stores an application and files read by the application.

The reader 1050 reads information which is recorded in a user ID card, and the network interface 1060 communicates with another device which is connected through a network.

The controller 1030 provides a user tray as described in the above embodiments to a GUI and performs an input user command by using a task tray and an application tray included in the user tray.

Here, user commands using the task tray include a task execution, a task addition, a task deletion, task scrolling, a task order replacement, task highlighting, etc. Also, user commands using the application tray include an application execution, application scrolling, an application order replacement, application highlighting, etc.

Also, the controller 1030 calls/ends an application tray, moves a user tray, and calls/ends the user tray according to the input user command.

FIG. 42 is a flowchart illustrating a control process performed by the controller 1030. As shown in FIG. 42, in operation S1110, the controller 1030 provides user trays to users who request the user trays.

The user trays provided in operation S1110 include task trays and application trays. Tasks included in the task trays and applications included in the application tray vary according to users.

The tasks included in the task trays are the same on a first stage but may vary through controls of the users.

In operation S1120, the controller 1030 performs user commands which are input through the user trays provided in operation S1110. The contents performed in operation S1120 include a task execution, a task addition, a task deletion, task scrolling, a task order replacement, task highlighting, an application execution, application scrolling, an application order replacement, application highlighting, application tray calling/ending, a user tray movement, user tray ending/automatic ending, etc.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. A method for providing a user list, the method comprising:
displaying a first task list, in which at least one task selected by a first user is includable, in a first area of a display; and
displaying a second task list, in which at least one task selected by a second user is includable, in a second area of the display.

2. The method as claimed in claim 1, further comprising: if one of tasks included in the first task list is moved to a third area of the display by the first user, displaying a task execution window in which the moved task has been executed.

3. The method as claimed in claim 2, further comprising making the moved task disappear from the first task list.

4. The method as claimed in claim 2, wherein the task execution window is displayed in a direction appropriate for the first user to look at.

5. The method as claimed in claim 2, wherein the third area is an area which is shared by the first and second users.

6. The method as claimed in claim 1, further comprising: if the task execution window displayed in the third area of the display is moved to the first task list, additionally including a task, which is executed in the moved task execution window, in the first task list.

7. The method as claimed in claim 6, further comprising making the moved task execution window disappear from the third area of the display.

8. The method as claimed in claim 1, further comprising: if one of tasks included in the first task list is moved toward a first direction, deleting the moved task from the first task list.

9. The method as claimed in claim 8, wherein the first direction is a direction which faces a side of the display.

10. The method as claimed in claim 1, further comprising displaying information for specifying the first user around the first task list.

11. The method as claimed in claim 1, wherein the first area of the display in which the first task list is displayed is an area which is adjacent to one of fourth sides of the display nearest to the first user.

12. The method as claimed in claim 1, wherein the first task list is displayed in a direction appropriate for the first user to look at.

13. The method as claimed in claim 1, wherein at least one task, which is first included in the first task list, is determined by information obtained from a medium possessed by the first user.

14. The method as claimed in claim 1, further comprising displaying a first application list, in which at least one application selected by the first user is includable, on the display.

15. The method as claimed in claim 14, wherein the display of the first application list is performed if an icon positioned around the first task list is selected by the first user.

16. The method as claimed in claim 14, wherein at least one application, which is first included in the first application list, is determined by information obtained from a medium possessed by the first user.

17. The method as claimed in claim 14, wherein a direction in which applications are listed in the first application list is different from a direction in which tasks are listed in the first task list.

18. The method as claimed in claim 14, further comprising: if one of applications included in the first application list is moved to the third area of the display by the first user, displaying an application execution window in which the moved application has been executed.

19. The method as claimed in claim 1, further comprising moving and displaying the first task list to a position command by the first user.

20. The method as claimed in claim 19, wherein when moving and displaying the first task list, the first task list is rotated and displayed in a direction appropriate to be looked at on a side of the display adjacent to the position.

21. The method as claimed in claim 1, further comprising:
if a particular icon displayed on the display is selected, displaying a third task list, in which tasks are includable, on the display; and
if a command to end the third task list is input, making the third task list disappear and displaying the particular icon.

22. A device comprising:
a display; and
a controller which displays a first task list, in which at least one task selected by a first user is includable, in a first area of the display and displays a second task list, in which at least one task selected by a second user is includable, in a second area of the display.

23. A method for providing a user list, the method comprising:
displaying a first application list, in which at least one application selected by a first user is includable, in a first area of a display; and
displaying a second application list, in which at least one application selected by a second user is includable, in a second area of the display.
